# EUROPEAN PATENT APPLICATION

(11) **EP 4 843 694 A1**
(43) Date of publication of application: **25.11.2026**
(21) Application number: 25178096.1
(22) Date of filing: 22.05.2025
(51) Int. Cl.: B23H 7/04, B23H 7/20, G05B 19/416

(54) **METHOD FOR WIRE ELECTRICAL DISCHARGE MACHINING**

(71) Applicant: Agie Charmilles SA, 6616 Losone (CH)
(72) Inventor: Boccadoro, Marco, 6653 Verscio (CH)
(74) Representative: Arend, Christa

(57) **Abstract**

The invention relates to a method and device for wire electrical discharge machining (WEDM), in which a signal representative of the gap width is acquired and used to determine a servo error signal. At the same time the discharge location along the wire is acquired as well. Then a weight coefficient Kₚₒₗₗ related to the geometric location of the discharge and/or a weight coefficient K_{dens} related to the present discharge density at that location are computed and used to modulate the servo error signal, and to control the gap distance.

## Description

The present invention refers to a method for the control of a wire electrical discharge machining process, in particular to a method to control the interelectrode gap distance between the wire electrode and the workpiece in a wire electrical discharge machining process.

### Background

The wire electrical discharge machining process (referred to as WEDM) is versatile and extremely accurate. A desired contour is cut in a workpiece by means of a wire electrode (wire) . Wire and workpiece are moved relatively to each other according to the instructions of a machining program. The process is conducted by applying a voltage to the gap between the workpiece and the wire. The workpiece material is removed by the action of electrical discharge pulses, also referred to as discharges, sparks, or pulses.

The distance between the wire and the workpiece (interelectrode distance, gap width, or simply "gap") must be controlled in real time and represents the foundation of the whole process control. This complex controller is called servo controller or simply "servo". Its behaviour influences the resulting geometry, surface quality, productivity, and risk of wire breakage.

Patent EP 0 920 943 discloses a method in which periodic pauses are introduced in the process, in order to eliminate the forces acting on the wire and straightening it, then acquiring the gap voltage and using this information to control the servo.

Patent EP 0 963 272 instead of introducing measuring pauses, lowers the pulse frequency to obtain the same result.

These two methods are effective to improve the final precision of the machining during the trim cuts, but not for the main cut regime.

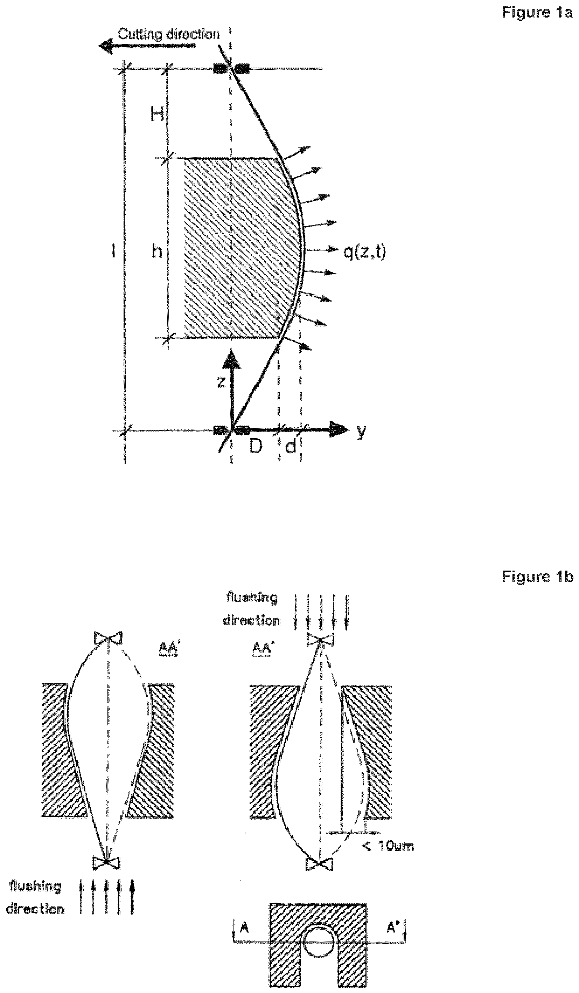

During the main cut, the wire is constantly bent away from the part as illustrated in Fig. 1. Introducing a pause in the process to measure would lower the productivity, since to straighten the wire the interpolator should back up along the cut.

A known method to control the servo in main cut is by measuring the average gap voltage or the average ignition delay, as disclosed e.g. in patent DE 22 50 872. This method does not distinguish between the individual measured values which are usually simply averaged. There is no correlation between measured value and its position along the wire. A heuristic approach known in the art is to improve the servo control by introducing a non-linearity in the transfer function.

From the above, one can see that an improved method for the servo control is highly desirable. The present invention eliminates the drawbacks of prior art, by radically changing the measuring approach, providing a reliable and efficient servo control.

### Summary of the invention

The object of the present invention is to provide an improved method for the control in real time of the distance between wire and workpiece, in particular by correlating the acquired gap measured value to the detected position of the discharges along the wire.

According to the present invention, these objectives are achieved through the features of independent claims. In addition, further advantageous embodiments follow from the dependent claims and the description.

The present invention is directed to a wire electrical discharge machining process, in which a workpiece is cut by applying discrete pulses to a gap between a wire electrode and the workpiece and thereby generating electrical discharges while moving the wire electrode and the workpiece with respect to each other, wherein a gap voltage is measured and a signal representative of the gap width is computed based on said measured gap voltage, and a servo error signal ε₁ is computed by subtracting a setpoint value S_{Soll}, U_{G_soll} of the control loop from said signal representative of the gap width, and a position of a present discharge along the engagement line of wire and workpiece is determined, and the servo error signal ε₁ is corrected based on a weight coefficient K_{dens_j} representing a local discharge density at the position of the present discharge, and/or based on a weight coefficient K_{poll_j} representing a local flushing quality at the position of the present discharge, and the gap width between the wire electrode and the workpiece is controlled based on said corrected servo error signal, ε₂.

In substance, the servo control method known in the art uses average process observer signals, which do not take the discharge position into account. In contrast, the inventive servo control method includes the determination of a corrected servo error signal ε₂ to reflect the effective local gap condition at the simultaneously determined position of the present discharge. Thus, the invention makes use of a real time discharge position detection including a discretization system by which weight coefficients can be assigned to discrete sections of the workpiece height.

A real time discharge distribution histogram can be obtained by counting the number of discharges occurring in each discrete vertical section of the workpiece height during an observation period. Knowing the real time spatial discharge distribution, one can determine the vertical section with the highest number of discharges occurred in an observation period and determine a local discharge density of each vertical section. It becomes possible to assign a weight to every measured gap value, according to the position of a present discharge along the wire.

Further aspects are set forth in the dependent claims, the following description and the drawings. Other features are inherent in the methods and products disclosed or will become apparent to those skilled in the art from the following detailed description and the figures.

### Description of preferred embodiments of the invention

Preferred embodiments of the invention will now be detailed with reference to the attached drawings, illustrating:
- Fig.1a: a sketch of the typical bending of the wire during machining, in main cut regime
- Fig.1b: a sketch of the wire bending by asymmetric flushing
- Fig.2: an exemplary system for the determination of the discharge position
- Fig.3: an exemplary discharge distribution histogram
- Fig.4: a simulation of the flushing flow in the kerf
- Fig.5a-5c: a schematic representation of flushing nozzles at different distance from the workpiece surface
- Fig.6: a graph illustrating an exemplary weight function for the discharge position
- Fig.7a-7b: a plot of gap voltage of the machining pulses, showing the voltage Uₚₐᵤₛₑ during the pulse pauses, and a plot of the current pulses
- Fig.8: a graph representing the weight coefficient Kₚₒₗₗ as a function of the average pulse pause Uₚₐᵤₛₑ
- Fig.9a-9b: a graph representing a lookup table for the weight coefficient K_{dens} as a function of the discharge position
- Fig. 10: a spreadsheet illustrating the improvement in the servo control due to the invention, compared to prior art
- Fig.11: a block diagram of the servo control loop according to the prior art
- Fig.12: a block diagram of the servo control loop according to the invention.

Figure 1a shows the typical shape of the wire during the main cut, in case of symmetric flushing from the upper and lower side. This bending is caused by the forces acting on the wire. During the process the wire is subject to several forces such as electrostatic forces which attract the wire towards the workpiece, process forces pushing the wire away from the workpiece, mechanical forces applied to the wire by means of the wire traveling circuit, hydrodynamic forces caused by the flushing, dynamic errors, wire vibrations, and wire bending stresses.

Fig. 1b is taken from the dissertation of W. Dekeyser, "Knowledge System for wire EDM, KUL Leuven", 1988. It shows the typical shape of the wire in case of asymmetric flushing conditions, either because of differences in the flushing pressure or flow, or because of flushing heads that are not at the same distance from the workpiece surface, e.g. in the case of a recessed workpiece.

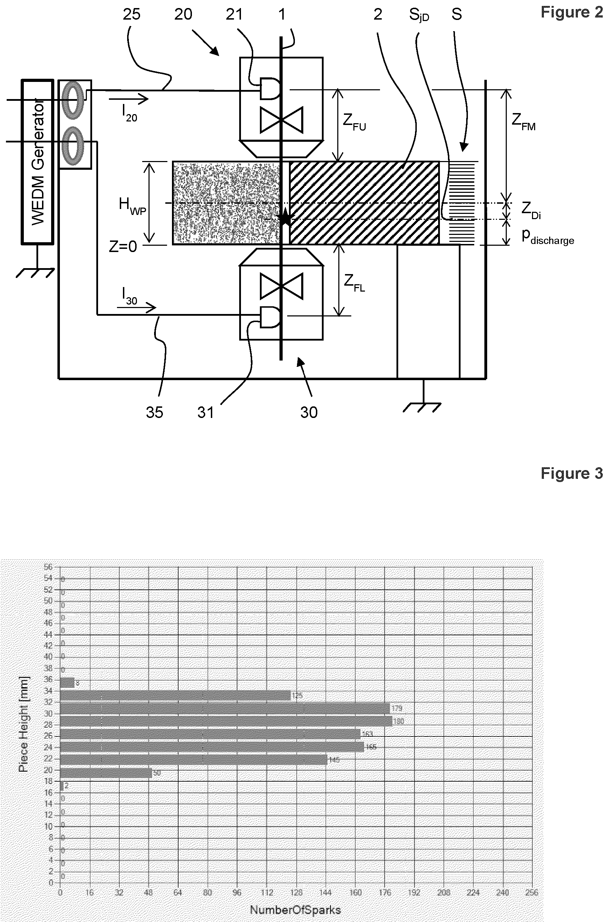

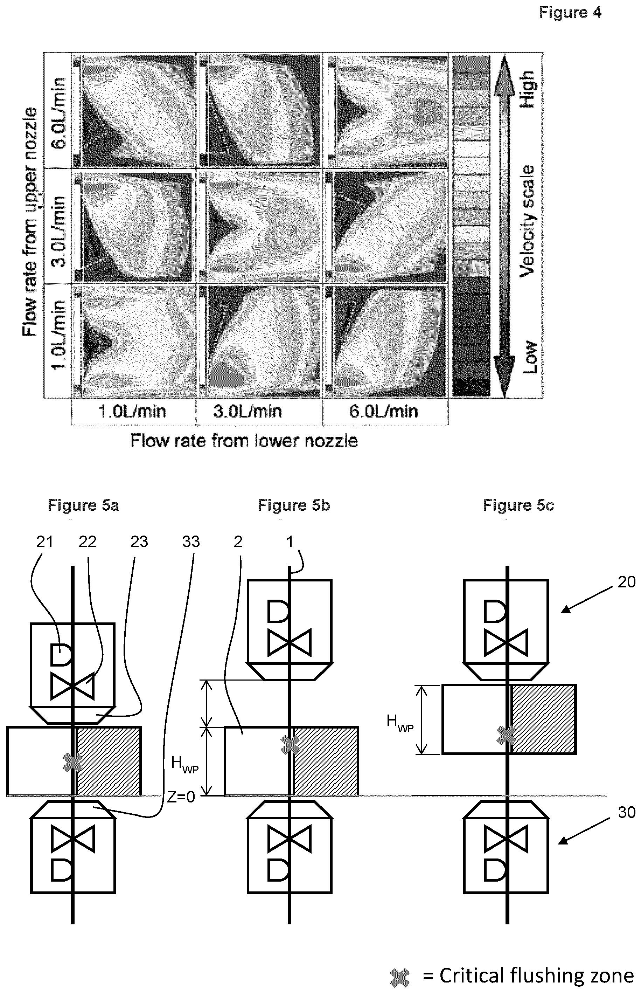

A method for real time detection of the discharge position is disclosed e.g. in patent EP 3 446 820. By subtracting the current I₂₀ of the upper and I₃₀ of the lower current feeder (see Fig.2), it is possible to compute the position Z_{Di} p_{discharge} of each discharge. The workpiece height is divided into a discrete number of vertical sections of the workpiece, and the discharge position corresponding to the vertical section increments a counter. Fig. 3 shows a discharge distribution histogram, illustrating the actual number of discharges per vertical section occurring in an observation period. This exemplary discharge distribution histogram was obtained by applying the method disclosed in EP 3 446 820. Fig. 4 is taken from Okada et al. "Computational Fluid Dynamics Analysis of Working Fluid Flow and Debris Movement in Wire EDMed Kerf." CIRP Annals 58, no. 1 (January 1, 2009), 209-212. This figure 4 illustrates the effect of varying flow rates at the upper- and lower flushing nozzle on the flushing flow in the kerf by means of computational fluid dynamics simulation. As expected, the flow velocity is maximal in proximity of the flushing nozzle and gradually decreases, whereby the flow follows the open kerf, away from the wire axis. With symmetric fluid supply, which is achieved by surface contiguous upper- and lower flushing nozzles 23, 33 as show in Fig. 5a, a more or less central area exists in which the flow velocity is lowest.

One sees that there are two main aspects to be considered to assess the importance of a particular discharge:
- The physical location of a discharge within the kerf, to take the local flushing quality into account. The location of a discharge is highly relevant because as illustrated above, the flushing flow is strongly dependent on the position of the discharge location in the kerf. In case of symmetric flushing flow and contiguous flushing nozzles the location where the flushing speed is lowest is at half height, but this can change for example according to Fig. 4. Where the flushing is poor, following effects occur:
   - the thermal load of the wire increases;
   - the eroded particles are not evacuated in time and one erodes many times the same particle;
   - the local conductivity increases, causing a stationary discharge; and
   - gas bubbles are more frequent.

All the above increases the risk of a wire breakage.
- The critical zone, that is the zone or vertical sections where most discharges occur. Here the thermal load of the wire is high, moreover the wire is worn out by the preceding discharges and there is a high risk of wire breakage.

As mentioned, the servo control method known in the art, in which the signal representative of the gap width is obtained by averaging every ignition delay or gap voltage sample has certain disadvantages, since it does not consider the discharge position respectively the flushing quality there, nor the local discharge density at the discharge position where the ignition delay or average voltage was measured. Therefore, the object of the invention is to provide an improved servo control method.

According to the present invention, a workpiece is cut by a wire electrical discharge machining process by applying discrete pulses to the gap between the wire electrode and the workpiece and thereby generating electrical discharges while moving the wire electrode and the workpiece with respect to each other. The gap voltage is measured, and a signal representative of the gap width is computed for each discharge based on said measured gap voltage. A servo error signal ε₁ is computed in known manner, by subtracting a setpoint value S_{Soll}, U_{G_soll} of the servo control loop from said signal representative of the gap width. The position of a present discharge along the engagement line of wire and workpiece is determined. According to the invention said servo error signal ε₁ is then corrected based on weight coefficients, including a weight coefficient K_{dens_j} representing a local discharge density at the position of the present discharge, and/or a weight coefficient K_{poll_j} representing a local flushing quality at the position of the present discharge. The position of the discharges along the engagement line of wire and workpiece is determined in real time. The gap width - for the avoidance of doubts, here this is the frontal distance between the wire electrode and the workpiece, in the cutting direction - is controlled based on a corrected servo error signal ε₂.

According to the present invention, the corrected servo error signal ε₂ is the product of servo error signal ε₁ times the weight coefficient K_{dens_j}, which reflects the local discharge density of a discharge distribution histogram at the present discharge position, and/or the weight coefficient K_{poll_j}, which reflects a local flushing quality at the present discharge position, which affects the local gap contamination level.

In the wire electrical discharge machining method according to the invention, every acquired value of the signal representative of the gap width (e.g. the ignition delay) is weighted by a coefficient Kₚₒₗₗ, related to the local flushing quality at the position of the present discharge and/or by a coefficient K_{dens} related to the local discharge density at the position of the present discharge. In this way the original servo error signal is corrected and enhanced to better reflect the gap condition at the present discharge position, and the servo control is improved.

Preferably the signal representative of the gap width is either the ignition delay, that is the time between the application of the ignition voltage to the breakdown, or, the average gap voltage measured in the course of a pulse period.

Other signals are also possible, for instance the ratio of the number of short pulses to the number of normal pulses occurring in each vertical section in the course of an observation period.

The invention makes use of a system for determination and classification of the position of individual discharges along the wire, such as disclosed e.g. in EP3446820A or EP4201570A. In particular, the position Z_{Di}, p_{discharge} of a discharge Dᵢ along the engagement line of wire and workpiece can be computed based on the difference ΔI₁₋₂ = I₁ - I₂ of a measured partial current I₁ flowing to the wire through an upper current feeding path, and a measured partial current I₂ flowing to the wire through a lower current feeding path, as show in Fig. 2. Alternatively, the position Z_{Di}, p_{discharge} of a discharge Dᵢ can be computed based on voltage difference ΔU_{CH1-2}= U_{CH1} - U_{CH2}, where a first voltage U_{CH1} is measured between a first current feeder and the workpiece, and a second voltage U_{CH2} is measured between a second current feeder and the workpiece (respectively a connected part. Moreover, the position Z_{Di}, p_{discharge} of a discharge Dᵢ can be determined using a value derived from the above methods.

According to the invention a workpiece height H_{WP} is divided into a discrete number N_{S} of vertical sections S, as shown in Fig.2. A discharge Dᵢ occurring in a gap, along the engagement line between wire and workpiece is assigned to a "discharge section" Sⱼ based on the determined discharge position p_{discharge} (Z_{Di}). The discharge section S_{jD} is the vertical section Sⱼ to which the present discharge can be assigned based on an upper and a lower limit of each of the vertical sections S₁ to S_{NS}.

Infurther, according to the invention a present discharge distribution histogram is determined by providing a discharge counter Cⱼ for each vertical section Sⱼ, and by setting an observation period T_{M},N_{DTM}. The number of discharges N_{Dj} occurring in each vertical section Sⱼ in the course of the observation period T_{M},N_{DTM} is counted, whereby the discharge counter Cⱼ of the discharge section S_{jD} is incremented.

The discretization of the workpiece height H_{WP} is of great advantage to associate information related to the specific discharge position. This includes the number of discharges occurring in a vertical section in the course of the observation period, but also the process signals collected in real time and which can be associated to the discharge section S_{jD}, means the vertical section in which the present vertical section takes place. The associated process signals may preferably include the ignition delay, the average gap voltage, the voltage in a pause period after a discharge, etc., but in principle any pulse characteristic can be determined and associated to the discharge section.

Typically, the method of partial currents mentioned in the previous paragraph provides a value proportional to the distance from the midpoint between an upper- and a lower current feeder along of the engagement line of wire and workpiece.

Z_{Di} is the discharge position found by means of such a discharge position location system, referred to the center position between two current feeders. In case of a symmetric constitution of upper- and lower wire guiding head as depicted in Fig.2 (Z_{FU}=Z_{FL}), the position Z_{Di} is zero at the center of the workpiece, the positions below are negative, and the positions above are positive. However, for the representation and reading of lookup tables it is more convenient to have the zero at the bottom of the workpiece height (machine table). The position p_{discharge} is found by adding the half workpiece height to the previously identified discharge position Z_{Di}.

The relation of p_{discharge} and Z_{Di}: p_{discharge} = Z_{Di} + H_{WP}/2

By this shift the first vertical section begins at the zero discharge position, as shown Fig 3.

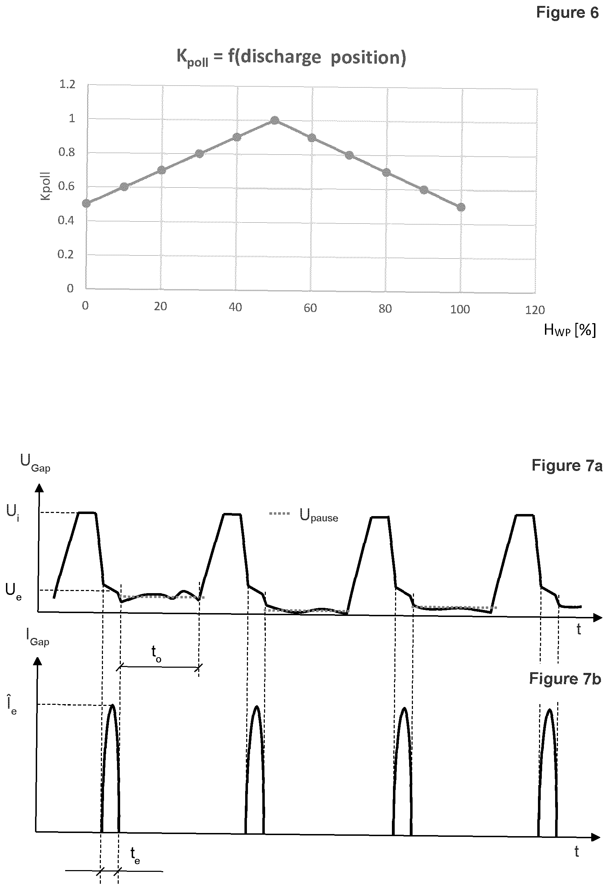

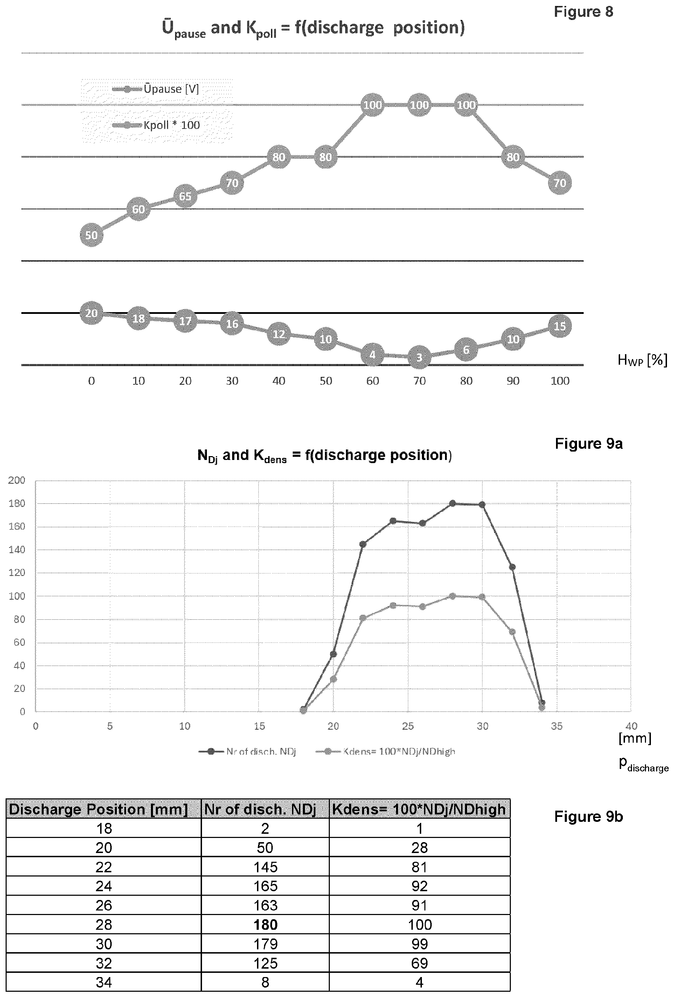

The weight coefficient Kₚₒₗₗ can be computed in two ways:
a) For workpieces having comparably large height, means higher than e.g. 50mm, the geometrical position of the discharge is relevant, since the problem of low flushing speed illustrated in Fig. 4 is preponderant.
   A function f (p_{discharge}) is used, correlating geometric location of the discharge and weight.${K}_{poll} = f \left({p}_{discharge}\right)$
   Where p_{discharge} is the vertical discharge position in % of the workpiece height.
   The exemplary function of Fig. 6 is a piecewise-defined function, as follows:
      K_{poll_min} = 0.5, K_{poll_max} = 1, H_{WP} = piece height [%]
      if p_{discharge} <= H_{WP} /2: Kₚₒₗₗ = K_{poll_min} + a* p_{discharge}
      if p_{discharge} > H_{WP} /2: Kₚₒₗₗ = K_{poll_max} - a* (p_{discharge} - H_{WP} /2)
         with a = (K_{poll_min} - K_{poll_max}) / (H_{WP} /2)
   The linear function of Fig. 6 must be considered only as an example; other functions are of course applicable for the method of the present invention. This function reflects the condition of workpiece contiguous nozzles shown in Figure 5a.
   The piece height H_{WP} e.g. in mm can be set by the user, or it can be provided by the CAD system, or obtained directly in the course of the process by means of a discharge position measuring system, as the difference of the position of the lowest and the highest vertical section where discharges are detected in the discharge distribution histogram. For example, in the case of Fig.3: 36-17 = 19 mm.
   Fig. 5a to 5c illustrates three different machining situations and shows the most critical flushing zone for each one. If the distance between the workpiece and any flushing nozzle is non negligible (> 1mm) the critical flushing zone and consequently the top of the Kₚₒₗₗ function is not the workpiece center, but at the center of the distance between the nozzles.
b) For all other cases, it is advisable to determine Kₚₒₗₗ by measurement of the gap condition, applying the method illustrated by Fig.7a and Fig.8. An auxiliary voltage is superposed to the gap voltage, typically of 20V. This is a resistive source, that is the voltage decreases if the resistance decreases (the gap contamination increases). This represents a resistivity indicator of the gap. Here the average gap voltage is measured in the pause period between subsequent pulses. Such principle is disclosed e.g. in DE 20 38 748.
   Fig. 8 shows exemplarily how Kₚₒₗₗ is correlated to the gap resistivity. The average pause gap voltage Uₚₐᵤₛₑ and the weight coefficient Kₚₒₗₗ are associated to the actual discharge position, which is measured by means of a discharge position measuring system and is assigned to the corresponding vertical section.

Thus, according to an embodiment, the pause gap voltage U_{Pause} is measured during a pulse pause tₒ, and the measured value U_{Pause} is associated to the latest discharge section S_{jD}, that is, the vertical section in which the discharge preceding said pulse pause has occurred. The average pause gap voltage U̅_{Pause_j} is then determined for each vertical section Sⱼ by adding up the pause gap voltages U_{Pause} measured in each vertical section Sⱼ during the observation period and by dividing that sum by the total number of discharges N_{Dj} determined in the respective vertical section Sⱼ during the same observation period.

According to an embodiment, a weight coefficient K_{poll_j} is now determined for each vertical section Sⱼ based on the determined average pause gap voltage U̅_{Pause_j} using a look-up table or a transform function, such as the one represented in Fig. 8.

The pause gap voltage U_{Pause} is measured in a pulse pause tₒ preferably after a waiting time t_{wait_U}, and while applying an auxiliary resistive voltage source. This voltage source can be either a direct current (DC) or an alternated current (AC) source. Preferably, this voltage source is an AC source to avoid the corrosion of the workpiece. In this case it has to be rectified before computing the average.

In summary, according to an embodiment the weight coefficient Kₚₒₗₗ is computed based on a function reflecting the flushing quality due to the geometric situation, which is expressed by a function, and based on the position of discharge (paragraph a), above). According to another embodiment, the weight coefficient Kₚₒₗₗ is computed for each vertical section based on the average pulse pause gap voltage measured in the respective vertical section (paragraph b), above).

The position dependent weight coefficient Kₚₒₗₗ is determined for the actual machining situation, for example contiguous nozzles, and the suitable weight coefficient is applied for the present discharge position. In this way a position dependent pollution of the gap can be considered by the process control.

The weight coefficient K_{dens} is used to give more importance to the discharges that occur where their density is higher. A discharge distribution histogram of the position of the discharges along the wire is computed, by sampling preferably at least 1000 discharges. Each discharge of an observation period is assigned to the vertical section to which the discharge position can be assigned (see exemplary Fig. 3). The K_{dens} table shown in Fig. 9b is derived from it. Its values can range exemplarily from 10 to 100% ${K}_{dens} = 100 * {N}_{Dj} / {N}_{Dhigh}$

Where:
N_{Dj} = number of discharges of a given vertical section,
N_{Dhigh} = highest number of discharges of a section vertical section of the distribution histogram.

In particular, according to an embodiment, a highest number of discharges N_{Dhigh} being the number of discharges of the vertical section Sⱼ with the highest number of discharges occurred during the observation period T_{M},N_{DTM} is determined by counting the number of discharges occurring in each vertical section during the observation period, and a weight coefficient K_{dens_j} is computed for each vertical section Sⱼ by dividing the number of discharges N_{Dj} occurring in that vertical section Sⱼ during the observation period T_{M},N_{DTM} by the previously determined highest number of discharges N_{Dhigh} determined during the same observation period.

Preferably, the ratio of N_{Dj} / N_{Dhigh} is further multiplied by a factor 100 to get the percent value.

Fig. 9a illustrates exemplarily the correlation between the discharge distribution shown in the histogram of Fig. 3 and the weight coefficient K_{dens}.

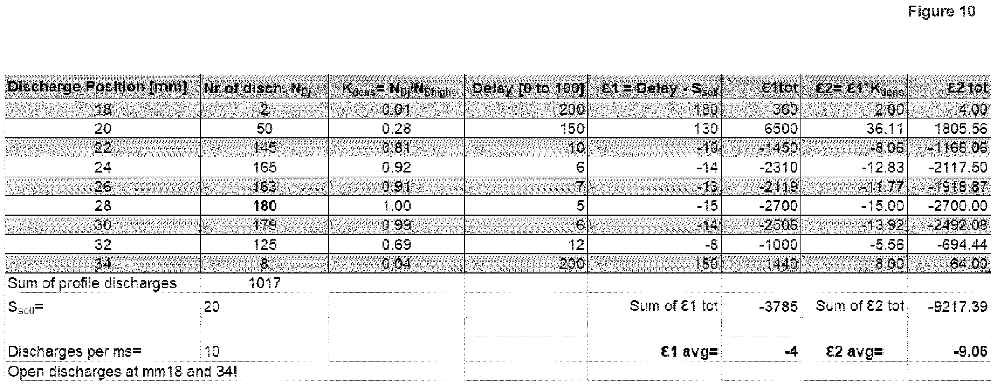

The table at Fig. 10 shows, by exemplary numbers of an observation period, how the invention mitigates the problem caused by the open voltage pulses (no discharge), which mislead the servo control.

The open voltage pulses can have a very large ignition delay, more than 100 % of the setpoint value. Here a number of 200 is chosen. The assumption is that, if there are few discharges at a given location, these have a big ignition delay, since the gap conductivity there is low, or the distance wire-workpiece is too big.

In the first column of the table, one sees the discharge position along of the workpiece height (reflecting the range of the vertical sections of the discharge position detection system, here in millimeters), in the second the number of discharges occurring at each vertical section of the workpiece height in an observation period (see discharge distribution shown in Fig. 3). In the third, the weight coefficient K_{dens}, which is computed for each vertical section by dividing the actual number of discharges in a vertical section N_{Dj} by the highest number of discharges N_{Dhigh} across all vertical sections (here N_{Dhigh} is 180). In the fourth column a typical exemplary ignition delay.

The ε₁ column contains the uncorrected servo error signal according to the prior art. The servo error signal is the difference of the actual ignition delay time and a setpoint value, S_{Soll}. (here S_{Soll} is 20).

The ε₂ column contains the corrected servo error signal according to the present invention. The corrected servo error signal ε₂ present is the product of the uncorrected servo error signal ε₁ and the weight coefficient K_{dens}.

If the servo error signal is positive, the wire advances towards the workpiece, and it retracts if this value is negative.

After summing (e.g. total 1017) and dividing by the highest number of discharges of the histogram, the servo errors (setpoints for the servo control system) ε_{1avg}= -4 (prior art) and ε_{2avg}= -9.06 are computed.

This means that the prior art servo only retracts a little, possibly remaining in a dangerous position, whereas the inventive servo retracts more, since it is not biased by the large numbers of open discharges.

The method according to the invention will now be presented in more detail.

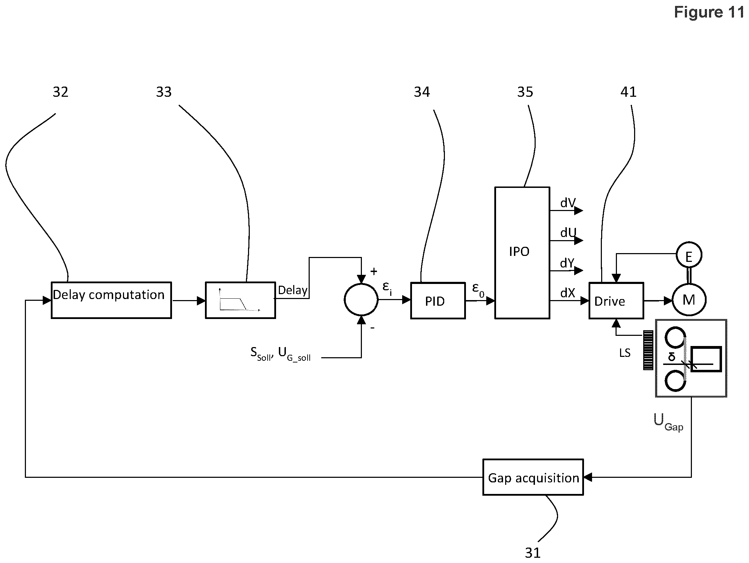

Fig. 11 shows a servo control loop according to the state of the art. The gap acquisition block 31 samples the ignition delay of each discharge, then this value is converted to a value from 0 to 100% in the block 32 and is then filtered by a low pass filter 33.

Then, the setpoint value of the control loop S_{Soll} is subtracted from this value, yielding an error signal εᵢ. εᵢ is processed by a PID block 34 that outputs ε₀. ε₀ is sent to the main interpolator 35 of the CNC that divides it to the active axes (only the X-axis is shown for simplicity).

The simplified control law is: ${ε}_{1} = Delay - {S}_{Soll}$

The system is in balance when ε₁ = 0, i.e. S_{Soll} = Delay
If S_{Soll} = 100, Delay = 100% (open gap)
If S_{Soll} = 0, Delay = 0% (smallest gap)

An important aspect of this method is the following: where few discharges or no discharges occur (open pulses), the ignition delay measured is big (typically 100%). This value enters the average ignition delay calculation and influences the computation more than, say, many small ignition delays (typically a few units %) coming from the central zone of the kerf (region marked by a cross in Figure 5a to 5c). In fact, a small ignition delay precedes usually a discharge (normal pulse) or a short circuit (short pulse). Now, if the filter of the servo is charged with a big ignition delay, it will not react fast enough to shorts or erosion pulses that have small delays and will advance until the filter is discharged to the S_{Soll} setpoint.

Here one sees the weaknesses of the actual servo:
- Peripheral and central discharges are considered in the same way.
- Open voltage periods cause a big delay and big numbers in the control loop.

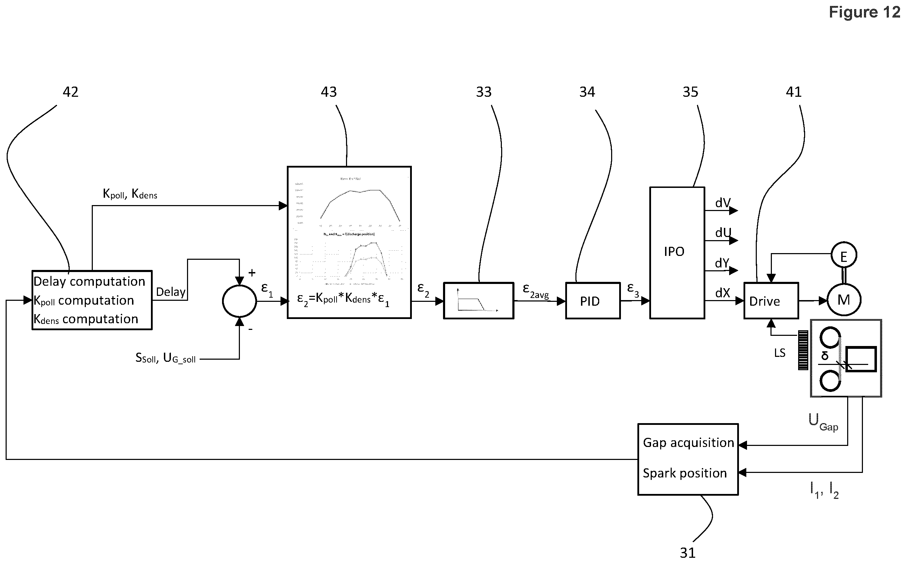

Referring now to Fig. 12, there is shown a block diagram of the inventive control loop. The gap acquisition block 31 samples the delay of each discharge, and also its position p_{discharge} [precise computation of p_{discharge}; 0 is at the bottom of WP].

The block 42 performs the following:
- The ignition delay value is converted to a value from 0 to 100%.
- Kₚₒₗₗ is retrieved by a lookup table Kₚₒₗₗ = f(p_{discharge})
- K_{dens} is retrieved by a lookup table derived from the actual discharge distribution histogram. A new discharge distribution histogram is available every 1000 discharge periods, e.g. 13 ms. The discharge distribution histogram may also continuously be updated by rolling determination of the number of discharges per vertical section (moving average).

S_{Soll} is subtracted from the Delay value, yielding ε₁. ${ε}_{1} = Delay - {S}_{Soll}$

The block 43 computes the multiplication with the two weights K_{dens} and Kₚₒₗₗ: ${ε}_{2} = {K}_{dens} * {K}_{poll} * {ε}_{1}$

The ε₂ values are filtered (33) during the servo sampling period (1 or 2 ms typically), yielding ε_{2avg}.

ε_{2avg} is further processed, e.g. through a PID transfer function (34) yielding ε₃, which is fed as the new position vector input to the machine interpolator IPO 35 that distributes this vector to the involved axes dX, dY, dU, dV. The interpolator outputs the setpoint to the drive that controls the axis.

The two coefficients K_{dens} and Kₚₒₗₗ have here a range from 0 to 1, but they can be bigger, or the reduction of amplification could be advantageously compensated by a gain factor in the PID block 34.

K_{dens} and Kₚₒₗₗ can be advantageously optimized by maximizing the feedrate (the advance speed into the workpiece) and by minimizing the servo instability Inst. This optimization may be achieved using artificial intelligence methods and machine learning algorithms, e.g. by repeating typical machining application cases until the best match is found.

The servo instability Inst can e.g. be computed by the following formula: $Inst = \left(\frac{1}{N}\right) ∗ {\sum }_{0}^{N} abs \left(ε{2}_{k + 1}-ε{2}_{k}\right)$

Where ε2ₖ₊₁ and ε2ₖ are sampled values of the corrected servo error signal at the time k+1 and k.

The absolute value is computed. N differences are summed and then divided by N to obtain a mean value.

While the essence of the invention has been pointed out, it will be understood that various substitutions and changes in the form of the details of the embodiments may be made by those skilled in the art without departing from the spirit of the invention.

### Reference symbols

- δ: Gap width, interelectrode distance
- Kₚₒₗₗ: coefficient related to the geometrical position of the discharge and/or to the gap pollution
- K_{dens}: coefficient related to the real time acquired discharge density
- Z_{Di}, P_{discharge}: discharge position (in % or mm) of the workpiece height, either from center or bottom
- K_{poll_max}: parameter of the exemplary function = 1
- K_{poll_min}: parameter of the exemplary function = 0.5
- N_{S}: number of vertical sections S
- Cⱼ: discharge counter of a vertical section Sⱼ
- T_{M},N_{DTM}: observation period
- N_{Dj}: number of discharges at a given vertical section Sⱼ during an observation period.
- N_{Dhigh}: Highest number of discharges of the discharge distribution histogram
- S_{Soll},U_{G_soll}: servo setpoint value for ignition delay and for gap voltage
- εᵢ: servo control error
- Delay: ignition delay
- Inst: process instability
- Uᵢ: Ignition voltage
- Uₑ: Discharge voltage, or, burning voltage
- Îₑ: Peak discharge current
- Uₚₐᵤₛₑ: auxiliary voltage value during the pulse pause (off time between two generator pulses)
- U̅ₚₐᵤₛₑ: average value of Uₚₐᵤₛₑ
- H_{WP}: workpiece height in mm

## Claims

1. Method for controlling a wire electrical discharge machining process, in which a workpiece is cut by applying discrete pulses to a gap between a wire electrode and the workpiece and thereby generating electrical discharges while moving the wire electrode and the workpiece with respect to each other, wherein an gap voltage is measured and a signal representative of the gap width is computed for each discharge based on said measured gap voltage, and a servo error signal ε₁ is computed by subtracting a setpoint value Sₛₒₗₗ, U_{G_soll} of a servo control loop from said signal representative of a gap width, and that a position of a present discharge along the engagement line of wire and workpiece is determined, **characterized in that** the servo error signal ε₁ is corrected to obtain a corrected servo error signal ε₂ based on
- a weight coefficient K_{dens_j} representing a local discharge density at the position of the present discharge, and/or
- a weight coefficient K_{poll_j} representing a local flushing quality at the position of the present discharge,
and that the gap width between the wire electrode and the workpiece is controlled based on said corrected servo error signal ε₂.

2. Method for controlling a wire electrical discharge machining process according to claim 1, wherein the signal representative of the gap width is an ignition delay time or an average gap voltage measured in a pulse period.

3. Method for controlling a wire electrical discharge machining process according to claim 1 or 2, wherein the position p_{discharge}, Z_{Di} of a present discharge Dᵢ along the engagement line of wire and workpiece is computed, based
- on the difference ΔI₁₋₂ of a measured partial current I₁ flowing to the wire through an upper current feeding path and a measured partial current I₂ flowing to the wire through a lower current feeding path, ΔI₁₋₂ = I₁ - I₂, or,
- on voltage difference ΔU_{CH}, where a first voltage U_{CH1} is measured between a first current feeder and the workpiece, and a second voltage U_{CH2} is measured between a second current feeder and the workpiece, ${ΔU}_{CH} = {U}_{CH 1} - {U}_{CH 2} , or ,$
- on a value derived from it.

4. Method for controlling a wire electrical discharge machining process according to one of the preceding claims, **characterized in that**
- a workpiece height H_{WP} is divided into a discrete number N_{S} of vertical sections S,
- a discharge Dᵢ occurring along the engagement line between wire and workpiece is assigned to a discharge section S_{jD} based on the determined discharge position Z_{Di}, p_{discharge}, the discharge section S_{jD} being the vertical section Sⱼ to which the present discharge can be assigned based on an upper and a lower limit of the vertical sections S.

5. Method for controlling a wire electrical discharge machining process according to one of the preceding claims, **characterized in that** a present discharge distribution histogram is determined by
- providing a discharge counter Cⱼ for each vertical section Sⱼ,
- setting an observation period T_{M},N_{DTM},
- counting the number of discharges N_{Dj} occurring in each vertical section Sⱼ in the course of said observation period T_{M},N_{DTM}, whereby the discharge counter Cⱼ of the discharge section S_{jD} is incremented.

6. Method for controlling a wire electrical discharge machining process according to one of the preceding claims, **characterized in that**
- a highest number of discharges N_{Dhigh} being the number of discharges of the vertical section Sⱼ with the highest number of discharges occurred during the observation period T_{M},N_{DTM} is determined,
- the weight coefficient K_{dens_j} is computed for each vertical section Sⱼ by dividing the number of discharges N_{Dj} occurring **in that** vertical section Sⱼ during the observation period T_{M},N_{DTM} by the highest number of discharges N_{Dhigh} determined during the same observation period.

7. Method for controlling a wire electrical discharge machining process according to claim 1 to 5, **characterized in that**, a pause gap voltage U_{Pause} is measured during a pulse pause tₒ, and the measured value U_{Pause} is associated to the discharge section S_{jD} in which the discharge preceding said pulse pause has occurred, and an average pause gap voltage U_{Pause_j} is determined for each vertical section Sⱼ by adding up the pause gap voltages U_{Pause} determined measured in each vertical section Sⱼ during the observation period and dividing that sum by the total number of discharges N_{Dj} determined in the respective vertical section Sⱼ during the same observation period.

8. Method for controlling a wire electrical discharge machining process according to claim 7, **characterized in that**, a weight coefficient k_{Poll_j} is determined for each vertical section Sⱼ based on the determined average pause gap voltage U̅_{Pause_j} using a transformation function or a look-up table.

9. Method for controlling a wire electrical discharge machining process according to claim 7 or 8, wherein the pause gap voltage U_{Pause} is measured in a pulse pause tₒ preferably after a waiting time t_{wait_U}, and while applying an auxiliary resistive voltage source.

10. Method for controlling a wire electrical discharge machining process according to one of the preceding claims, wherein the corrected servo error signal ε₂ is the product of servo error signal ε₁ times the weight coefficient K_{dens_j} and/or the weight coefficient K_{poll_j}.

11. A wire electrical discharge machine tool including a wire electrode and machine table for mounting a workpiece thereon, and including a pulse generator, wherein the workpiece is cut by applying discrete pulses to a gap between the wire electrode and the workpiece and thereby generating electrical discharges while moving the wire electrode and the workpiece with respect to each other, wherein an gap voltage is measured and a signal representative of the gap width is computed for each discharge based on said measured gap voltage, and a servo error signal ε₁ is computed by subtracting a setpoint value Sₛₒₗₗ, U_{G_soll} of a servo control loop from said signal representative of a gap width, and that a position of a present discharge along the engagement line of wire and workpiece is determined, **characterized in that** the wire electrical discharge machine tool comprises a controller which is configured to correct the servo error signal ε₁ to obtain a corrected servo error signal ε₂ based on
- a weight coefficient K_{dens_j} representing a local discharge density at the position of the present discharge, and/or
- a weight coefficient K_{poll_j} representing a local flushing quality at the position of the present discharge,
and that the gap width between the wire electrode and the workpiece is controlled based on said corrected servo error signal ε₂.
